# EUROPEAN PATENT SPECIFICATION

(11) **EP 4 085 380 B1**
(45) Date of publication and mention of the grant of the patent: **12.06.2024**
(21) Application number: 20845754.9
(22) Date of filing: 30.12.2020
(51) Int. Cl.: H01Q 1/38, G06K 19/077, H01Q 1/22

(54) **METHOD FOR CREATING A COIL TYPE ANTENNA FOR A RFID TAG**
VERFAHREN ZUR ERZEUGUNG EINER ANTENNE VOM SPULENTYP FÜR EIN RFID-ETIKETT
PROCÉDÉ DE CRÉATION D'UNE ANTENNE DE TYPE BOBINE POUR UNE ÉTIQUETTE RFID

(30) Priority: 30.12.2019 US 201962955017 P
(43) Date of publication of application: 09.11.2022
(73) Proprietor: Avery Dennison Retail Information Services LLC, Mentor, OH 44060 (US)
(72) Inventor: FORSTER, Ian, J., Mentor, OH 44060 (US)
(74) Representative: HGF
(86) International application number: PCT/US2020/067515
(87) International publication number: WO 2021/138452

(56) References cited:
- US-A1- 2008 068 280
- US-A1- 2011 073 661

## Description

### BACKGROUND

Generally stated, radio-frequency identification is the use of electromagnetic energy to stimulate a responsive device (known as an RFID "tag" or transponder) to identify itself and, in some cases, provide additional information and/or data stored in the tag. RFID tags typically comprise a semiconductor device commonly referred to as the "chip", upon which are formed a memory and an operating circuitry, which is connected to an antenna. Typically, RFID tags act as transponders, providing information stored in the chip memory in response to a radio frequency interrogation signal received from a reader, also referred to as an interrogator. In the case of passive RFID devices, the energy of the interrogation signal also provides the necessary energy to operate the RFID tag device.

RFID tags may be incorporated into or attached to articles that a user wishes to later identify and/or track. In some cases, the RFID tag may be attached to the outside of the article with a clip, adhesive, tape, or other means and, in other cases, the RFID tag may be inserted within the article, such as being included in the packaging, located within the container of the article or plurality of articles, or sewn into a garment. Further, RFID tags are manufactured with a unique identification number which is a simple serial number of a few bytes with a check digit attached. This identification number is incorporated into the RFID tag during its manufacture. The user cannot alter this serial/identification number, and manufacturers guarantee that each RFID tag serial number is used only once and is, therefore, unique. Such read-only RFID tags typically are permanently attached to an article to be identified and/or tracked and, once attached, the serial number of the tag is associated with its host article in a computer database.

Typically, an item can be affixed with a specific RFID tag unique to the item. The RFID reader can then be employed to read the RFID tag to determine if a particular item is amongst a larger group of items. For example, in a product tracking scenario, unique RFID tags may be affixed to a number of products. A user looking for a particular product may use an RFID reader to communicate with that product's unique RFID tag. More specifically, the RFID reader is capable of determining whether the sought after product is present in a particular area, such as within a carton or other container.

The increased demand for RFID tags has created a need for a manufacturing method that can quickly, efficiently, and economically produce RFID antennas. A conventional method of creating a coil type conductor with a gap between the turns of the coil is achieved with a blade, such as a knife or rotary or flat plate die cutting tool. For example, a rotary cutting tool may be pushed into a foil and/or laminate material to cut the material to a specific depth, creating a gap between the turns of the coil. Once the cutting tool is removed from the material, however, the gap between the coil turns may begin to close. As the various gaps close, the foil edges may come into contact with each other, thereby shorting out the coil and rendering the RFID tag unusable.

Consequently, there is a long felt need in the art for a method of manufacturing RFID tag coil type antennas that improves quality and usability.

US 2011/073661 discloses a method, system and apparatus for manufacturing radio frequency identification (RFID) devices. An RFID device can be formed with a substrate, a conductor and a laminate or coating. The RFID device can be such that an antenna can be formed on the conductor and the laminate can be applied to insulate or protect the antenna.

### SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

According to the present invention there is provided a method of constructing a coil antenna structure according to appended claim 1.

In some embodiments, applying the force may include applying a linear force to an outer end of the coiled antenna. Applying the force may include applying a torque applied to one or more parts of the coiled antenna. Applying the force may include applying a bending moment applied to one or more parts of the coiled antenna. Applying the force may include applying at least one of heating and cooling one or more parts of the coiled antenna. The method may include bonding the conductive layer to a substrate layer. The method may include bonding the conductive layer to a flexible material, and bonding the flexible material to a substrate layer.

In some embodiments, the flexible material may be cured after the coil may be unwound to preserve the gap. The flexible material may include an adhesive. The method may include cutting an edge of the coiled antenna at a plurality of locations. The edge may be cut at a plurality of locations to form notches. The method may include creating stress relief distortions by distressing the coiled antenna. Distressing the coiled antenna may include at least one of embossing and folding at least a portion of the coiled antenna. Distressing the coiled antenna includes embossing the coiled antenna with a tessellating pattern.

In some embodiments, the conductive layer may include a metal foil. The substrate layer may be manufactured from a paper or a thermoplastic polymer resin. The method may include bonding the substrate layer to a liner such that the substrate layer may be disposed between the liner and the coiled antenna. The liner may be a film base. The force may be applied to the conductive layer by applying a distortion to the liner. The unwound coil may include a trace. A liquid flexible material may be directed into the gap after the coil may be unwound to preserve the gap. The method may include fixing the gap in place. To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and are intended to include all such aspects and their equivalents. Other advantages and novel features will become apparent from the following detailed description when considered in conjunction with the drawings.

### BRIEF DESCRIPTION OF THE DRAWINGS

Fig. 1A illustrates an overhead view of a coil antenna structure for an RFID device with a gap between turns of the coil which does not form part of the claimed invention.
Fig. 1B illustrates an overhead view of an antenna structure for an RFID device without gaps in the coil which does not form part of the claimed invention .
Fig. 2A illustrates a cross-sectional view of a laminate of a coil antenna structure for an RFID device which does not form part of the claimed invention.
Fig. 2B illustrates a cross-sectional view of the laminate of the antenna structure for the RFID device of Fig. 2A with a gap therein which does not form part of the claimed invention.
Fig. 2C illustrates a cross-sectional view of the laminate of the antenna structure for the RFID device of Fig. 2A without the gap which does not form part of the claimed invention.
Figs. 3A-3B illustrate an overhead view of a coil antenna structure in a wound and unwound position in accordance with some embodiments.
Fig. 4 illustrates a flowchart for constructing a coil antenna structure for an RFID device in accordance with some embodiments.
Figs. 5A-5C illustrate a cross-sectional view of a cutting process for constructing a coil antenna structure in accordance with some embodiments.
Fig. 6A-6F illustrate perspective and side views of a coil antenna structure in various positions in accordance with some embodiments.
Figs. 7A-7C illustrate various partial top views of a conductive layer of a coil antenna structure in accordance with some embodiments.
Figs. 8A-8C illustrate side and top views of a coil antenna structure in accordance with some embodiments.
Fig. 9 illustrates a top view of a conductive layer having distortions in accordance with some embodiments.
Fig. 10 illustrates a partial cross-sectional view of a conductive layer in accordance with some embodiments.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

Various embodiments of the disclosure relate to methods for manufacturing a radio frequency identification (RFID) tag antenna configured in a coil arrangement. Some methods include cutting and deforming processes that may generate a coil type antenna that has improved resistance to shorting out during use. For example, some methods are discussed that may help keep the edges of various coil type antennas separated to prevent contact.

The length of traditional antennas for use with RFID devices may be limited by the relatively small or finite amount of space available on most RFID tag devices. While coil type RFID antennas can increase the amount of inductance of the antenna in a limited amount of space, coil type antennas sometimes relatively difficult and expensive to manufacture. More specifically, a significant problem associated coil type antennas are that the foil edges of the antenna structure can easily come into contact with each other, shorting out the coil and rendering the RFID tag unusable. Another significant potential problem is that when using a cutting process to create the spiral or coil shape, the metal foil material may separate from the substrate and break, thereby rendering the coil antenna unusable.

Furthermore, while blade cutting techniques for creating coil type antennas are useful, once the cutting blade is removed from the material, the gap cut between the turns of the spiral coil may begin to close up for some conventional systems. As the gaps close, the foil edges may come into contact with each other, thereby shorting out the coil and rendering the RFID tag useless. Consequently, there is a long felt need in the art for improved methods of manufacturing RFID tag antennas and creating improved devices. For some embodiments, various disclosed methods may allow for the manufacture of coil type antennas for RFID devices with improvements to one or more of gap integrity, resistance to breaking or shorting out, speed and cost of manufacturing, and reliability.

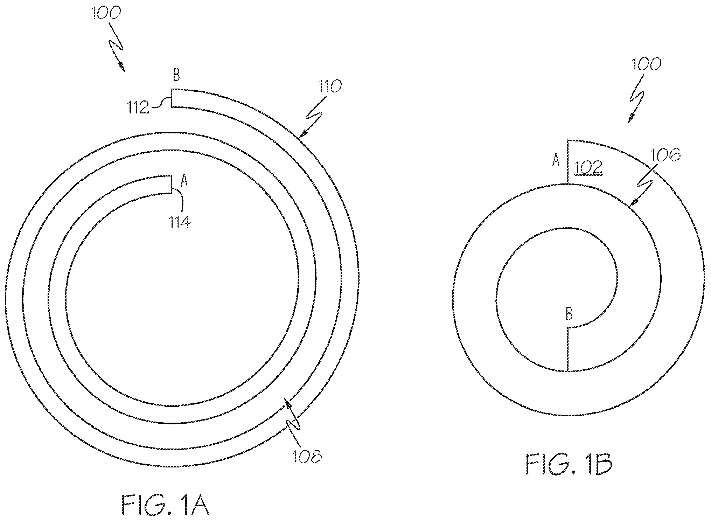

Figs. 1A and 1B illustrate an antenna structure 100 configured in a coil or spiral shape that may be used as part of an RFID device which are not part of the claimed invention. A spiraling gap 108 is created when a blade or other device is used to create cut line 106, as shown in Fig. 1B. A portion of a conductive material 102 may be removed from the antenna structure of Fig. 1B to widen the gap 108 (e.g., as shown in Fig. 1A) as cut line 106 is opened up. More specifically, some of the material between turns of the antenna structure 100 may be removed by a removal process, such as laser ablation, wherein a defined width of metal, for example approximately 100µm, is vaporized to widen the gap 108 between the coil turns. The gap 108 may initially be created or widened by methods such as blade cutting or other physical cutting techniques and pulling out the conductive material 102 and/or etching, milling, or other suitable removal methods. Once cut or otherwise formed, the antenna structure 100 comprises a conductive trace 110, or coil type conductor, with an inductance between an outer termination 112 and an inner termination 114.

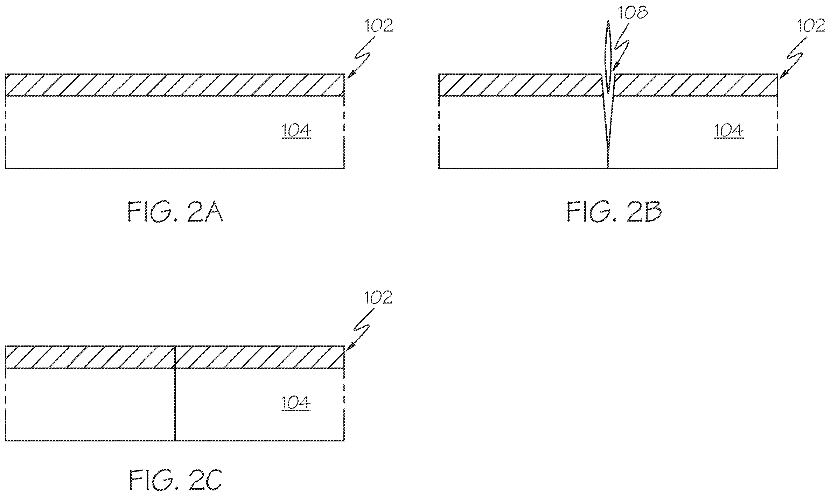

As illustrated in Fig. 2A, which does not form part of the claimed invention, the antenna structure 100 includes a substrate 104 in direct contact with the conductive material 102. Fig. 2B which does not form part of the claimed invention, illustrates a cross-sectional view of a gap 108 (e.g., a spiraling gap) between the turns of the coil, which may be created by a cutting blade such as a knife or rotary or a flat plate die cutting tool. The conductive material 102 may include a metal foil or similar conductive material suitable for use as an RFID antenna. The substrate 104 may include one or more of a paper, a thermoplastic polymer resin such as polyethylene terephthalate (PET), or a similar suitable base material. As the cutting blade is pushed downward, the conductive material 102 and the substrate 104 may be cut to a selected depth to create a gap that separates and is defined by turns of the coil 100. However, Fig. 2C which does not form part of the claimed invention, illustrates a problem commonly associated with this approach. Once the cutting tool has been removed, the gap 108 may tend to close up back into the cut line 106. As the gap 108 closes, the edges of the conductive material 102 may come into contact with one another, thereby shorting out the coil antenna 100 so that it can no longer function as part of an RFID tag.

In some embodiments, a manufacturing process is provided for improved creation of coil antennas. For example, an exemplary method involves cutting into a laminate that includes a foil and a base, such as paper or PET, to create a coil antenna for use as an RFID tag, such as an HF RFID tag. In some embodiments, deformation of the cut material prevents the edges of the coil from coming into contact with one another and shorting out the RFID antenna. The cutting process may be accomplished with a rotary die cutter, a cold foil cutter, or any similar cutting apparatus for use in cutting out RFID antennas.

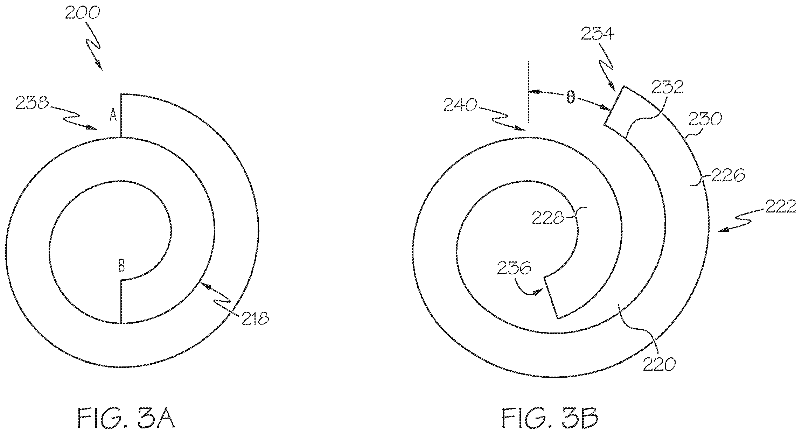

Various embodiments, such as in Figs. 3A-5C, include an antenna structure 200 and a method of constructing the antenna structure. In some embodiments, the antenna structure 200 includes a coil antenna structure with a spiral or coil like shape for use with an RFID device such as an HF RFID tag. The coil antenna structure 200 may include a laminate 202 and a flexible material 212. The laminate 202 further may include a conductive layer 204 and a substrate layer 210. The conductive layer 204 may include a metal foil or similar conductive material suitable for use as an RFID antenna. The substrate layer 210 may include a paper, a thermoplastic polymer resin (such as polyethylene terephthalate (PET)), or a similar suitable base material. The flexible material 212 may be sandwiched between the conductive layer 204 and the substrate layer 210. Additionally, the laminate 202 may be fixed to a liner as described *infra.*

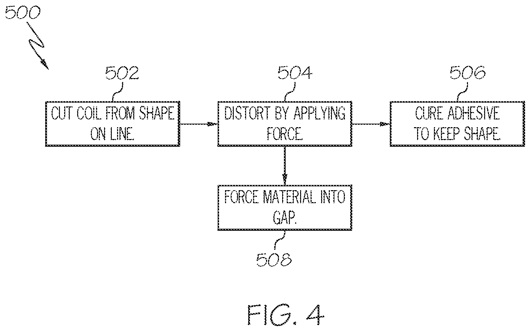

A method of constructing a coil RFID antenna structure 500 in accordance with some embodiments is described in Fig. 4. For some embodiments, the method 500 begins by providing the laminate 202 comprising the conductive layer 204 and the substrate layer 210. In some embodiments, the conductive layer 204 may be fixed to the substrate layer 210 with the flexible material 212. At step 502, the laminate 202 is cut through the conductive material into a coil like pattern demarked by a cut line 218 in the material, as best shown in Fig. 3A. In Fig. 3A, the antenna structure 200 exists in a wound, or unopened, position 238. At step 504, the coil is moved to an unwound position 240 as it is distorted by applying one or more forces, as illustrated in Fig. 3B.

In the unwound position 240, the conductive layer 204 is opened into a conductive trace 222 comprising a plurality of turns separated by a gap 220 created as the cut line 218 is separated apart. The plurality of turns may include an outer turn 226, at least one inner turn 228, an outer edge 230, and an inner edge 232. The conductive trace 222 further may include an outer termination 234 and an inner termination 236.

The width of the conductive trace 222 may be between 0-5, 5-10, 8-12, 10-15, 15-20, 20-30, 30-40, 40-60, 60-80, 80-100, 100-120, 120-140, 140-160, 160-200, 200-400, 400-600, or 600-1000 microns or between 0-1, 1-2, 2-3, 3-4, 4-5, 5-10, 10-20mm, or larger. An acceptable threshold for a width of a gap 108 can reduce the occurrence of contact between turns of the antenna structure 200 to achieve commercially acceptable production results. The acceptable threshold may be between 0-5, 5-10, 8-12, 10-15, 15-20, 20-30, 30-40, 40-60, 60-80, 80-100, 100-120, 120-140, 140-160, 160-200, 200-400, 400-600, or 600-1000 microns or between 0-1, 1-2, 2-3, 3-4, 4-5, 5-10, 10-20mm, or larger.

In various embodiments, one or more forces may be applied to the cut laminate 202 to create the gap 220 between the plurality of turns of the coil. For example, an angular push at angle Θ may be made at an outer termination 234 of the cut material to unwind the antenna structure 200, thereby repositioning the outer termination 234 at an angle Θ with respect to its original wound position 238.

In some embodiments, the force may be applied by applying one or more of a linear force, a torque, a bending moment, heating, or cooling to one or more parts of the coil, flexible material 212, and/or the substrate or liner. By pushing or moving one or more parts of the coil, flexible material 212, and/or the substrate or liner, the other remaining attached parts of the coil, flexible material 212, and/or the substrate or liner may also be caused to be pushed or moved through friction and/or through other mechanical coupling with the object or part being moved.

In some embodiments, the angular push at angle Θ may be accomplished by using a physical object to contact an outer termination 234 of the trace 222. In some embodiments, one or more a counter forces may be applied to one or more additional sections of the trace 222.

With the conductive layer 204 fixed to the substrate layer 210 by the flexible material 212, the coil unwinds thereby creating the gap 220. For a given angle of movement Θ on the outside, the gap 220 created will be a function of the number of turns and angle, the size of the antenna structure 200, the final length of the conductive trace 222, among other factors. Alternative methods of creating the gap 220 may comprise distortion or stretching, as discussed *infra.*

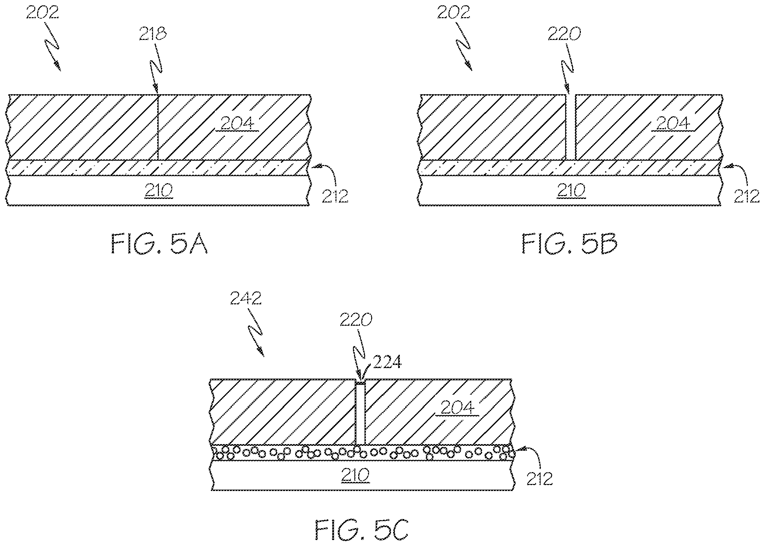

The method 500 continues by fixing the unwound antenna structure 200 in place with the flexible material 212 as illustrated by the fixed position 242 of the antenna structure 200 depicted in Fig. 5C. The flexible material 212 may comprise a compliant material, such as an adhesive. Once the force or distortion has been applied at step 504 and the gap 220 is present, the flexible material 212 may be cured at step 506 to hold conductive trace 222 in its unwound state with the gap 220 in a fixed position 242. As such, the flexible material 212 may be cured after the conductive trace 222 is unwound to preserve the gap 220.

Alternatively, the method 500 may continue at step 508 by fixing the unwound antenna structure 200 in place, such as with a non-cure material such as a varnish or a curable material. The additional material 224 added may be flexible or non-flexible. Once the distortion has been applied and the gap 220 is created, the additional material 224 may be forced into the gap 220, thereby jamming or prompting it open, to hold the conductive traces 222 in its state with a gap 220 in the fixed position 242. As such, the additional material 224 is directed into the gap 220 after the conductive trace 222 is unwound to preserve the gap 220. Exemplary additional material 224 may include one or more of adhesive, paint, rubber, plastic, wood, glass, ceramic, paper, cardboard, or carbon fiber. In some embodiments, an additional layer of material may be added to the top of the conductive traces 222 to hold them in place. For example, a plastic, glass, or wood layer may be bonded to the conductive traces 222 to prevent them from shifting position and potentially contacting another conductive trace 222.

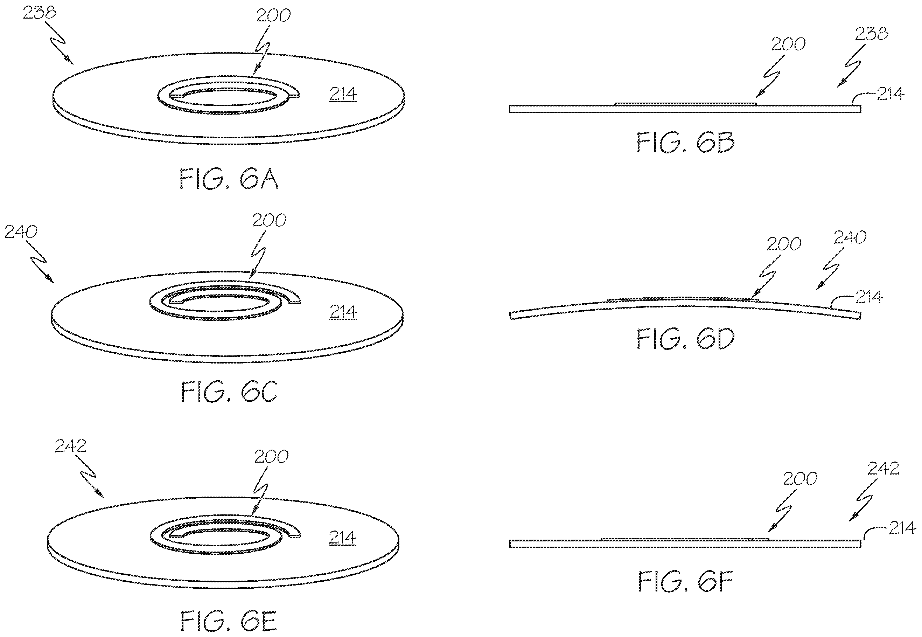

In some embodiments, such as in Figs. 6A-6F, the laminate 202 may be fixed to a liner or base 214, such as a flat film, film base, or similar distortable material with the flexible material 212. After the laminate 202 is cut into the coil shape, the coil antenna structure 200 is distorted to create the gap 220 between the plurality of turns of the conductive trace 220, as described in Figs. 6C and 6D. The distortion may be generated by a force applied to the liner or base 216 that pushes the liner or base 216 in a generally convex direction, as shown in Fig. 6D. For example, a bending moment may be applied to the liner or base 216, such as around an axis that helps define a plane in which the liner or base 216 is disposed. By bending the liner or base 216, an upper surface on which the coil antenna structure 200 is disposed and/or connected to may be stretched and/or expanded. The opposite face of the base 216 may be compressed.

In some embodiments, the additional material 224 may be then cured and/or forced into the gap 220 so that the gap 220 remains open. For example, the additional material 224 may be a liquid or powder that is poured, injected, or otherwise allowed to flow into the gap. In some embodiments, a solid additional material 224 may be heated and allowed to melt at least in part such that it flows into the gap 220.

Once the distortion force is discontinued, the coil antenna structure 200 may naturally return to its flat state. However, given that the coil antenna structure 200 may be fixed, the gap 220 may remain unwound and set in the fixed position 242.

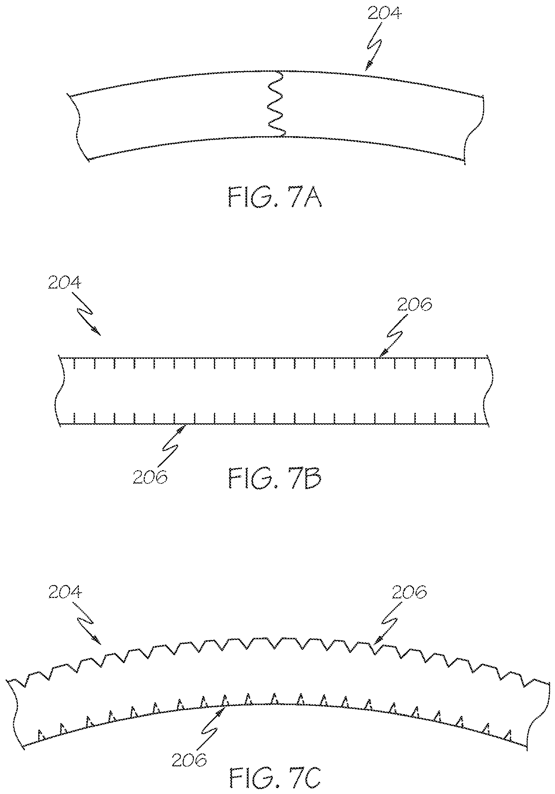

In some embodiments, one or more forces may be applied to the conductive layer 204 through distortion, such as through one or more of bending, twisting, stretching, torqueing, flexing, rolling, or other mechanisms for applying stress or changing the shape of the conductive layer. For example, Fig. 7A illustrates a section of the conductive layer 204 formed into a curve as may occur when forming coil antenna structure 200. As the conductive trace 222 is formed, the outer edge 230 may be stretched or elongated due to the tensile forces being applied thereto, and the inner edge 232 may be compressed which creates a shearing or ripping force on the conductive layer 204 that could lead to the possibility of tearing conductive trace 222 and rendering the coil antenna structure 200 unusable. To overcome these forces and reduce the risk of damage to coil antenna structure 200, the laminate 202 and/or the conductive layer 204 of the laminate 202 may further comprise a plurality of notches 206 cut therein approximately perpendicularly to the cut line 218, as best illustrated in Fig. 7B. As such, the foil or conductive material may then have a series of small cuts made along its outer and inner edges 230, 232. Therefore, when force may be applied and the coil antenna structure 200 may be bent, the notches 206 along the outer edge 230 will open up and distribute the stretch in the conductive layer 204, as illustrated in Fig. 7C. Further, the notches 206 along the inner edge 232 may overlap or slide over themselves, thereby allowing the inner edge 232 to compress without tearing and damaging antenna structure 200. In some embodiments, the inner edge 232 and/or the outer edge 230 may be formed with a series of curving indentations and/or protrusions, such as for a sine wave. The formation may occur when the conductive layer 204 is formed or modified such as through casting, molding, painting, electroplating, cutting, or other methods.

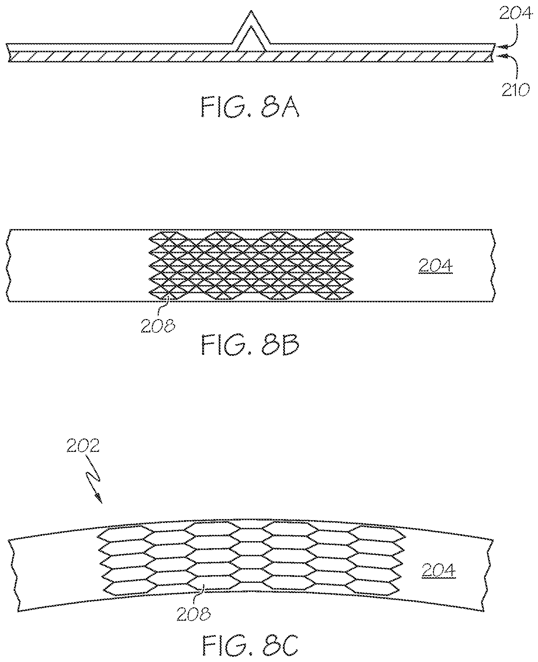

In some embodiments, at least part of the conductive layer 204 may comprise an embossed portion 208, which may result in some of the structures illustrated in Figs. 8A, 8B, and 8C. The embossed portions 208 may include indentations, peaks, ridges, or protrusions formed in the foil, such as indentations formed in a tessellating pattern. The tessellating pattern may comprise hexagons, or any other geometric or non-geometric shapes that would be conducive to decreasing a stretching force to prevent tearing. Fig. 8B illustrates a top view of the embossed portion 208 indented into the conductive layer 204. As the conductive layer 204 may be stretched, pulled apart, or otherwise distorted to create or expand the gap 220, the embossed portion 208 indentations, folds, peaks, ridges, or other shapes may allow for bending, stretching, turning, or straightening an embossed portion 208 of the conductive layer 204. For example, some embossed portions 208 of the conductive layer 204 may be stretched by forces that tend to pull the embossed portion 208 towards being flat, which may occur along the outer edge 230 or in other areas. In some embodiments, one or more embossed portions 208 may experience compression by allowing pre-formed gaps to close, folds to increase in height, angles between folds to compress, sliding of some embossed portions 208 over a liner 210, and/or other changes. Compression may occur, for example, at an embossed portion 208 along the inner edge 232, which may push the embossed portion 208 upward to prevent tearing of the conductive layer, thus reducing the likelihood of damage to the coil antenna structure 200. In some embodiments, expansion, compression, turning, or straightening of the embossed portion 208 of the conductive layer 204 may be like the movement of an accordion as it is turned, expanded, or compressed.

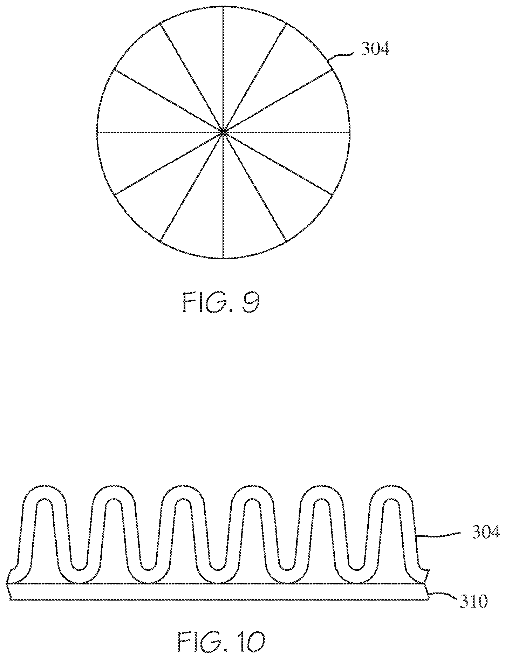

In some embodiments, such as in Fig. 9, a series of radially extending ridges, valleys, and/or may be formed in an upper surface of the conductive layer 304. These distortions may make it easier to expand and separate the gaps between the coils, such as the coils for a conductive layer 304.

In some embodiments, Fig. 10 provides a partial cross-sectional view of a conductive layer 304 attached to a substrate layer 310 in accordance with some embodiments. In various embodiments, the conductive layer 304 may be distorted such as by embossing, folding, denting, scratching, twisting, wrinkling, pulling, pinching, or other methods. In various embodiments, one or more of these operations may act to move part or all of an outer surface and/or an inner surface of the conductive layer 304. The outer surface may be exposed to an outer environment, and the inner surface may be disposed in proximity to the substrate layer 310. In some embodiments, the distortion may lift parts of the conductive layer 304 away from the liner 310, such as in Fig. 10. In some embodiments, the distortion may lift, fold, bend, or otherwise distort parts of the liner 310 along with the conductive layer 304. For example, embossing may use one or more protrusions that: 1) extend up through the liner 310 and into the conductive layer 304; and/or 2) extend down through the conductive layer 304 and into the liner 310 to create the wrinkles, folds, protrusions, or dents described herein.

What has been described above includes examples of the claimed subject matter. It may be, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter may be intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method (500) of constructing a coil antenna structure (200), the method comprising:
forming (502) a coiled antenna (238) by cutting a spiraling cut line (218) into a conductive layer (204, 304) to form a plurality of turns; **characterized by**
applying (504) a force to the coiled antenna to move the coiled antenna to an unwound position (240), wherein, in the unwound position, the cut line is expanded to form a gap (220) between the turns (226,228) of the coil of the conductive layer, the gap separating the turns by a distance great enough to prevent conductive sections of the coil from touching each other.

2. The method of claim 1, wherein applying the force comprises applying one or more of: a linear force to an outer end (234) of the coiled antenna (238); a torque applied to one or more parts of the coiled antenna (238); and a bending moment applied to one or more parts of the coiled antenna (238).

3. The method of any of claims 1-2, further comprising:
bonding the conductive layer (204, 304) to a substrate layer (210).

4. The method of any of claims 1-2, further comprising:
bonding the conductive layer (204, 304) to a flexible material (212); and
bonding the flexible material to a substrate layer (210), optionally wherein the flexible material (212) is cured (506) after the coil is unwound to preserve the gap (220).

5. The method of claim 4, wherein the flexible material (212) comprises an adhesive.

6. The method of any of claims 1-5, further comprising cutting an edge (230, 232) of the coiled antenna (238) at a plurality of locations, optionally wherein the edge is cut at a plurality of locations to form notches (206).

7. The method of any of claims 1-6, further comprising
creating stress relief distortions by distressing the coiled antenna (238), wherein distressing the coiled antenna comprises at least one of embossing (208) and folding at least a portion of the coiled antenna (238); optionally wherein distressing the coiled antenna includes embossing (208) the coiled antenna (238) with a tessellating pattern.

8. The method of any of claims 1-7, wherein the conductive layer (204, 304) comprises a metal foil.

9. The method of any of claims 3-5, or any of claims 6-8 when dependent on either of claim 3 or claim 4, wherein the substrate layer (210) is manufactured from a paper or a thermoplastic polymer resin.

10. The method of any of claims 3-5, or any of claims 6-9 when dependent on either of claim 3 or claim 4, further comprising bonding the substrate layer (210) to a liner (214) such that the substrate layer is disposed between the liner and the coiled antenna (238); optionally wherein the liner (214) is a film base.

11. The method of claim 10, wherein the force is applied to the conductive layer (204) by applying a distortion to the liner (214).

12. The method of any of claims 1-11, wherein the unwound coil (240) comprises a trace (222).

13. The method of any of claims 1-12, wherein a liquid flexible material (212) is directed into the gap (220) after the coil is unwound to preserve the gap (220).

14. The method of any of claims 1-13, further comprising fixing the gap (220) in place.

15. The method of any of claims 1-14, wherein the gap (220) is fixed in place by attaching an additional layer on the coil.

## Patentansprüche

1. Verfahren (500) zum Konstruieren einer Spulenantennenstruktur (200), wobei das Verfahren Folgendes umfasst:
Bilden (502) einer gespulten Antenne (238) durch Schneiden einer spiralförmigen Schnittlinie (218) in eine leitende Schicht (204, 304), um eine Vielzahl von Windungen zu bilden, **gekennzeichnet durch** Ausüben (504) einer Kraft auf die gespulte Antenne, um die gespulte Antenne zu einer abgewickelten Position (240) zu bewegen, wobei in der abgewickelten Position die Schnittlinie erweitert ist, um einen Spalt (220) zwischen den Windungen (226, 228) der Spule der leitenden Schicht zu bilden, wobei der Spalt die Windungen um einen Abstand trennt, der groß genug ist, um zu verhindern, dass leitende Abschnitte der Spule einander berühren.

2. Verfahren nach Anspruch 1, wobei das Ausüben der Kraft Ausüben von einem oder mehreren des Folgenden umfasst: einer linearen Kraft auf ein äußeres Ende (234) der gespulten Antenne (238); einem Drehmoment, das auf einen oder mehrere Teile der gespulten Antenne (238) ausgeübt wird, und einem Biegemoment, das auf einen oder mehrere Teile der gespulten Antenne (238) ausgeübt wird.

3. Verfahren nach einem der Ansprüche 1-2, ferner umfassend:
Verbinden der leitenden Schicht (204,304) mit einer Substratschicht (210).

4. Verfahren nach einem der Ansprüche 1-2, ferner umfassend:
Verbinden der leitenden Schicht (204,304) mit einem flexiblen Material (212); und
Verbinden des flexiblen Materials mit einer Substratschicht (210), wobei optional das flexible Material (212) ausgehärtet (506) wird, nachdem die Spule abgewickelt ist, um den Spalt (220) zu bewahren.

5. Verfahren nach Anspruch 4, wobei das flexible Material (212) einen Klebstoff umfasst.

6. Verfahren nach einem der Ansprüche 1-5, ferner umfassend Schneiden einer Kante (230, 232) der gespulten Antenne (238) an einer Vielzahl von Stellen, wobei optional die Kante an einer Vielzahl von Stellen geschnitten wird, um Kerben (206) zu bilden.

7. Verfahren nach einem der Ansprüche 1-6, ferner umfassend
Erzeugen von Spannungsentlastungsverzerrungen durch Beanspruchen der gespulten Antenne (238), wobei das Beanspruchen der gespulten Antenne zumindest eines von Prägen (208) und Falten von zumindest einem Bereich der gespulten Antenne (238) umfasst; wobei optional das Beanspruchen der gespulten Antenne Prägen (208) der gespulten Antenne (238) mit einem Mosaikmuster beinhaltet.

8. Verfahren nach einem der Ansprüche 1-7, wobei die leitende Schicht (204, 304) eine Metallfolie umfasst.

9. Verfahren nach einem der Ansprüche 3-5 oder einem der Ansprüche 6-8, wenn von Anspruch 3 oder Anspruch 4 abhängig, wobei die Substratschicht (210) aus einem Papier oder einem thermoplastischen Polymerharz hergestellt ist.

10. Verfahren nach einem der Ansprüche 3-5 oder einem der Ansprüche 6-9, wenn von Anspruch 3 oder Anspruch 4 abhängig, ferner umfassend Verbinden der Substratschicht (210) mit einer Auskleidung (214), sodass die Substratschicht zwischen der Auskleidung und der gespulten Antenne (238) angeordnet ist, wobei optional die Auskleidung (214) eine Filmbasis ist.

11. Verfahren nach Anspruch 10, wobei die Kraft auf die leitende Schicht (204) ausgeübt wird, indem eine Verformung auf die Auskleidung (214) ausgeübt wird.

12. Verfahren nach einem der Ansprüche 1-11, wobei die abgewickelte Spule (240) eine Spur (222) umfasst.

13. Verfahren nach einem der Ansprüche 1-12, wobei ein flüssiges flexibles Material (212) in den Spalt (220) geleitet wird, nachdem die Spule abgewickelt ist, um den Spalt (220) zu bewahren.

14. Verfahren nach einem der Ansprüche 1-13, ferner umfassend Fixieren des Spalts (220) an Ort und Stelle.

15. Verfahren nach einem der Ansprüche 1-14, wobei der Spalt (220) durch Anbringen einer zusätzlichen Schicht auf der Spule an Ort und Stelle fixiert wird.

## Revendications

1. Procédé (500) de construction d'une structure d'antenne de type bobine (200), le procédé comprenant :
la formation (502) d'une antenne bobinée (238) en découpant une ligne coupée en spirale (218) dans une couche conductrice (204, 304) pour former une pluralité de spires ; **caractérisé par** l'application (504) d'une force à l'antenne bobinée pour déplacer l'antenne bobinée vers une position déroulée (240), dans la position déroulée, ladite ligne coupée étant étendue pour former un espace (220) entre les spires (226, 228) de la bobine de la couche conductrice, l'espace séparant les spires d'une distance suffisamment grande pour empêcher les sections conductrices de la bobine de se toucher.

2. Procédé de la revendication 1, ladite application de la force comprenant l'application d'un ou plusieurs parmi : une force linéaire à une extrémité externe (234) de l'antenne bobinée (238) ; un couple appliqué à une ou plusieurs parties de l'antenne bobinée (238) ; et un moment de flexion appliqué à une ou plusieurs parties de l'antenne bobinée (238).

3. Procédé de l'une quelconque des revendications 1-2, comprenant en outre :
la liaison de la couche conductrice (204, 304) à une couche de substrat (210).

4. Procédé de l'une quelconque des revendications 1-2, comprenant en outre :
la liaison de la couche conductrice (204, 304) à un matériau souple (212) ; et
la liaison du matériau souple à une couche de substrat (210), éventuellement ledit matériau souple (212) étant durci (506) après que la bobine a été déroulée pour préserver l'espace (220).

5. Procédé de la revendication 4, ledit matériau souple (212) comprenant un adhésif.

6. Procédé de l'une quelconque des revendications 1-5, comprenant en outre la découpe d'un bord (230, 232) de l'antenne bobinée (238) au niveau d'une pluralité d'emplacements, éventuellement ledit bord étant coupé au niveau d'une pluralité d'emplacements pour former des encoches (206).

7. Procédé de l'une quelconque des revendications 1-6, comprenant en outre la création de distorsions de soulagement de contraintes en éliminant les contraintes de l'antenne bobinée (238), l'élimination de contraintes de l'antenne bobinée comprenant au moins l'un parmi le gaufrage (208) et le pliage d'au moins une partie de l'antenne bobinée (238) ; éventuellement, l'élimination de contraintes de l'antenne bobinée comprenant le gaufrage (208) de l'antenne bobinée (238) avec un motif de pavage.

8. Procédé de l'une quelconque des revendications 1-7, ladite couche conductrice (204, 304) comprenant une feuille métallique.

9. Procédé de l'une quelconque des revendications 3-5, ou de l'une quelconque des revendications 6-8 lorsqu'elles dépendent de la revendication 3 ou de la revendication 4, ladite couche de substrat (210) étant fabriquée à partir d'un papier ou d'une résine polymère thermoplastique.

10. Procédé de l'une quelconque des revendications 3-5, ou de l'une quelconque des revendications 6-9 lorsqu'elles dépendent de la revendication 3 ou de la revendication 4, comprenant en outre la liaison de la couche de substrat (210) à un revêtement (214) de sorte que la couche de substrat soit disposée entre le revêtement et l'antenne bobinée (238) ; éventuellement, ledit revêtement (214) étant une base de film.

11. Procédé de la revendication 10, ladite force étant appliquée à la couche conductrice (204) en appliquant une distorsion au revêtement (214).

12. Procédé de l'une quelconque des revendications 1-11, ladite bobine déroulée (240) comprenant une trace (222).

13. Procédé de l'une quelconque des revendications 1-12, un matériau souple liquide (212) étant dirigé dans l'espace (220) après que la bobine a été déroulée pour préserver l'espace (220).

14. Procédé de l'une quelconque des revendications 1-13, comprenant en outre la fixation de l'espace (220) en place.

15. Procédé de l'une quelconque des revendications 1-14, ledit espace (220) étant fixé en place en fixant une couche supplémentaire sur la bobine.
